# EUROPEAN PATENT APPLICATION

(11) **EP 4 838 832 A1**
(43) Date of publication of application: **11.11.2026**
(21) Application number: 25175155.8
(22) Date of filing: 08.05.2025
(51) Int. Cl.: H04L 9/08, H04L 9/00

(54) **A VERIFIER SYSTEM AND METHOD FOR PRIVACY PRESERVING VERIFIABLE PRESENTATIONS**

(71) Applicant: Partisia Infrastructure ApS, 8200 Aarhus N (DK)
(72) Inventor: DALSKOV, Anders Peter Kragh, 8200 Aarhus N (DK); THOMSEN, Søren Eller, 8200 Aarhus N (DK); NIELSEN, Kurt, 8200 Aarhus N (DK); FRANDSEN, Peter Frands, 8200 Aarhus N (DK)
(74) Representative: AWA Denmark A/S

(57) **Abstract**

The present invention presents a verifier system and method for privacy preserving verifiable presentations transferred securely between a device and verifier system. The verifier system comprises a plurality of servers each having at least one processing unit configured to process data and at least one data communication unit. The verifier system is configured to be in data communication with at least one device. At least one server of the plurality of servers is configured to act as relying party and at least two servers of the plurality of servers are configured to act as nodes in a multiparty computation, MPC, verifier. The relying party and the MPC verifier are configured to be in data communication. The relying party is configured to provide an initial request to the MPC verifier, requiring a result based on a verifiable presentation from a device. The MPC verifier is configured to generate an authorisation request based on the initial request. The relying party is configured to forward an authorisation request, preferably signed, from the MPC verifier to a device. The relying party is configured to receive an encrypted authorisation response comprising a verifiable presentation from a device and forward the encrypted authorisation response to the MPC verifier. The MPC verifier is configured to decrypt the authorisation response before computing the result based on the authorization response and sending the result to the relying party. The relying party is configured to obtain knowledge of the requested result.

## Description

### Field of invention

The present invention relates to a verifier system and method for privacy preserving verifiable presentations transferred securely between a device and the verifier system.

### Background of the invention

An important issue in the digital world today is that an individual user identity must be handled with trust. The user's identity may be managed and authenticated in different ways by different means more or less securely. Self-sovereign identity, SSI, encompasses a vision of individual users being in full control of the user's own identity and the data associated with user's identity.

SSI revolves around issuers that issue verifiable credentials, VCs, to a user who store the identity data on the user's own device, for example in an identity software wallet on the mobile phone. Verifiers are a third-party who can receive various types of identity data presentations from credentials, for example proof of country and birthdate. Presentations of VCs is the equivalent of showing physical credentials, such as a passport, but in a digital and secure manner. Presentations are generated in identity wallets by the users themselves. The exchange of the presentations may be facilitated by a centralized service providing a secure connection.

The user may receive and hold multiple VCs from multiple issuers, wherein the VCs are entirely owned and managed by the user. The identity data is only found in the user's own hardware, until the user chooses to present the identity data. The identity data may be protected with privacy features, such as selective disclosure and zero-knowledge proofs. e.g., only showing jurisdiction and prove the age of the user is more than 18 years on, from a complete KYC credential that contains much more information than what's needed for the verifier.

However, as much as SSI offers users true ownership of identity data, SSI also poses challenges in regard to privacy and compliance when activating the data through presentations for verifiers, backup and storage. SSI does not have strong enough privacy when activating the data through presentations because once a VC has been presented to a verifier, regardless of using privacy features, such as selective disclosure and zero-knowledge proofs, the data rest with the verifier in a black box that the user cannot control. How data is handled from there would rely on trusting the verifiers to comply with regulations, such as GDPR, potential auditing from authorities, and any specific agreements with the users. The user identity can be vulnerable if for example the centralized authority is compromised.

### Summary of the invention

It is an object of the present invention to overcome these problems by providing a verifier system, and a method, for preserving verifiable presentations, such that that the privacy is ensured, when a verifiable presentation is requested for example by a relying party.

It is also an object to provide an agile verifier system, which is capable of being in communication with a plurality of devices comprising presentation regardless the configuration of the devices, and to provide a verifier system which provides computation in a rapid and secured manner.

The present invention addresses this by providing a verifier system for preserving verifiable presentations in privacy, wherein the verifier system comprises a plurality of servers each having at least one processing unit configured to process data and at least one data communication unit, wherein the verifier system is configured to be in data communication with at least one device, wherein at least one server of the plurality of servers is configured to act as relying party and at least two servers of the plurality of servers are configured to act as nodes in a multiparty computation, MPC, verifier, wherein the relying party and the MPC verifier are configured to be in data communication, wherein the relying party is configured to provide an initial request to the MPC verifier, requiring a result based on a verifiable presentation from a device, wherein the MPC verifier is configured to generate an authorisation request based on the initial request, wherein the relying party is configured to forward an authorisation request from the MPC verifier to a device, wherein the relying party is configured to receive an encrypted authorisation response comprising a verifiable presentation from a device and forward the encrypted authorisation response to the MPC verifier, wherein the MPC verifier is configured to decrypt the authorisation response before sending the result to the relying party, wherein the relying party is configured to obtains knowledge of the requested result.

Using a verifiable credential is referring to information about a user of a device, e.g., wallet device, attested to by an issuer that can later be presented in the form of a verifiable presentation to a verifier which can then cryptographically verify that this information was attested to by the issuer. It is assumed that the device comprise one or more verifiable credential and that the device is configured to provide a verifiable presentation upon an approved requested. The verifier system may comprise a plurality of servers each having at least one processing unit configured to process data and at least one data communication unit. The verifier system is configured to be in data communication with at least one device. The device may be a wallet device or similar comprising a presentation. The user of the device may use the device as in a usual SSI-scenario. The relying party may rely on the verifiable credentials, which are stored on a device. A presentation of the verifiable credentials or a result of a presentation of the verifiable credentials may be requested by the verifier system. A requested result may for example comprise a whole or part of a presentation of the verifiable credentials or an answer derived from the whole or part of the presentation of the verifiable credentials. At least one server of the plurality of servers is configured to act as relying party. At least two servers of the plurality of servers are configured to act as nodes in a multiparty computation, MPC, verifier. The servers of the MPC verifier may be configured to run an MPC scheme. These servers will together run an MPC computation and help the relying party to obtain certainty about the information given in a presentation protocol.

The relying party and the MPC verifier are configured to be in data communication. The relying party and the device are configured to be in data communication. The relying party is configured to send an authorisation request to the device, without knowing what is comprised in the authorisation request. A user of the device approves or reject the authorisation request from the relying party. It may be necessary for a user of a selected device to know whom the user are making a verifiable presentation to, and the verifiable presentation may be presented in one form or another to ensure, such that the verifiable presentation or shares of the verifiable presentation only may be visible for the specific verifier. In this case specific verifier may be the MPC verifier. If the user approves the authorisation request sent from the relying party, the user approves that the device sends an authorisation response from the device to the receiving party. The relying party is configured to receive an authorisation response from the device. The authorisation response may comprise the presentation. The presentation may be verifiable. The relying party does not know what is comprised in the authorisation response.

The relying party may select a device from where the relying party wishes to receive a presentation from. The relying party provides an initial request and sends the initial request to the MPC verifier. The MPC verifier provides an authorisation request based on the initial request. The MPC verifier sends the authorisation request to the relying party. The relying party forwards the authorisation request to the selected device.

If the user approves the authorisation request from the relying party, the user may approve that the selected device sends an encrypted authorisation response from the selected device to the receiving party. The relying party may receive an encrypted authorisation response from the selected device and forward the encrypted authorisation response to the MPC verifier to be decrypted. The MPC verifier may verify the authorisation response before sending the result to the relying party. The relying party is configured to obtain knowledge of the requested result.

In an advantageous embodiment of the invention, the relying party is configured to receive at least two shares of the result from the MPC verifier and reconstruct the requested result from the at least two shares, and thereby obtains knowledge of the requested result.

The relying party obtains knowledge of the requested result provided from receiving the requested result. The requested result may be sent to the relying party divided into shares. The relying party is configured to reconstruct the requested result from the at least two shares. The servers, which are configured to act as nodes in the MPC verifier, may each be configured to compute a share of the encrypted authorisation response. The nodes may each compute a secret share of the encrypted authorisation response. The result of the MPC computation may be shares of a requested result, which may be reconstructed in the verifier system. The MPC verifier may be configured to reconstruct the requested result from the at least two shares and provide the requested result to the relying party. Alternatively, the relying party may be configured to receive the shares from the MPC verifier and reconstruct the requested result from the at least two shares. The relying party and the MPC verifier may be configured to secretly sharing the requested result or shares of the requested result. The MPC verifier may provide the requested result or shares of the requested result to the relying party. The MPC verifier may secretly share the requested result or shares of the requested result with the relying party. The relying party may thereby obtain knowledge of the requested result based on the verifiable presentation provided from the selected device.

In a further advantageous embodiment of the invention, the MPC verifier is configured to identify the initial request and, if accepted, provide an accepted initial request, wherein the MPC verifier is configured to provide an authorisation request by adding data information to the accepted initial request, wherein the MPC verifier is configured to send the authorisation request via the relying party.

The MPC verifier receives the initial request from the relying party. The MPC verifier may verify that the initial request is valid and determine if the initial request may be accepted. The initial request may comprise a request identification. The servers in the MPC verifier may accept the initial request based on the data information provided by the relying party. The servers in the MPC verifier may accept the initial request based on at least a request identification. For example, if the request identification may be a new request identification provided in a new initial request, the servers in the MPC verifier may each accept the initial request as a new request from the relying party. If the request identification may not be comprised a new request identification, or an error has occurred, then the MPC verifier may reject or ignore the initial request. For example, if the request identification may be a new request identification provided in a new verification request template, the servers acting as a node in the MPC verifier may each accept the initial request as a new request from the relying party. If a predetermined number of nodes does not accept the initial request, then the MPC verifier may reject or ignore the verification request template. The MPC verifier may provide an authorisation request by adding data information to an accepted initial request. The MPC verifier may choose to sign the authorisation request. The MPC verifier may send the signed authorisation request to the relying party. The relying party may send the signed authorisation request to a selected device. The selected device may be configured to read the authorisation request.

In a still further advantageous embodiment of the invention, the data information comprises at least one encryption information.

The data information added to the accepted initial request may comprise at least one encryption information provided by the MPC verifier. The encryption information may be used, such that the selected device may encrypt the authorisation response before sending the authorisation response to the relying party. The data communication from the device to the verifier may contain an actual verifiable presentation, which may be encrypted using a key specified by the verifier system. The MPC verifier may be configured to decrypt the authorisation response based on the encryption information. The encryption information may be unknown to the relying party, such that the relying party is not capable of decrypting or reading an authorisation response from the selected device and is therefore prevented from obtaining knowledge of the verifiable presentation as such at that stage.

In a further advantageous embodiment of the invention, the verifier system is configured to at least provide at least generate a function according to a predetermined definition and provide at least one request templet identification and the request function to a request template.

The verifier system may provide a request templet, such that the relying party sends an initial request to the MPC verifier, the relying party uses a reference to a request template. The request templet is known for both the relying party and the MPC verifier. The request templet may comprise at least one request templet identification and the request function. The request function may be provided according to a predetermined definition stating which reply the relying party wishes to request from a device. The request template may comprise at least one request templet identification defining a specific request of a result. A request identification allows both the relying party and the MPC verifier to refer to the particular request template, when the relying party sends an initial request to the MPC verifier. The verification request template may comprise the function, which the relying party may choose according to a predetermined presentation definition and, if preferred, the result the relying party wish to request. The presentation definition may comprise data information related to the requested result obtained from verifiable credentials in the verifiable presentation. The presentation definition specifies what the relying party requests of knowledge from the selected device. The presentation definition may comprise data information related to a purpose of the presentation definition, which may be used to describe what purpose the verifiable presentation may be provided for.

Alternatively, the relying party may send at least the request templet identification, which may point to a request templet comprising the function , to the MPC verifier, such that the MPC verifier provides an accepted request template or similar. The MPC verifier may still verify that the request identification of the initial request is valid and that the request templet identification is valid and determine if the initial request may be accepted.

The servers acting as nodes in the MPC verifier may accept the initial request based on the initial request provided by the relying party. If the request templet identification is referring to the correct request templet, the servers in the MPC verifier may each accept the initial request as a new request from the relying party. If the request templet identification may not refer to a request templet, or an error has occurred, then the MPC verifier may reject or ignore the initial request. If the request templet identification may refer to a known request template, the servers acting as nodes in the MPC verifier may each accept the initial request as a new request from the relying party. If a predetermined number of nodes does not accept that the request templet identification refer to a known request template, then the MPC verifier may reject or ignore the initial request. The MPC verifier may provide an authorisation request by adding data information to an accepted initial request based on the request templet. The MPC verifier may choose to encrypt the authorisation request. The MPC verifier may send the encrypted authorisation request to the relying party. The relying party may send the authorisation request to a selected device. The selected device may be configured to decrypt the authorisation request.

In a still further advantageous embodiment of the invention, the data communication between the relying party and a device is based on at least one of a plurality of data communication protocols selected by the relying party or a device.

The data communication between the relying party and a selected device, which selected device is the device the relying party wish to be in communication with, is based on an agreement of a data communication protocol. By choosing a protocol, enables the relying party to communicate with different devices communicating with different protocols, regardless of the protocol structure. The selected device may be limited to supporting only one protocol. The verifier system may choose between a variety of protocols. By doing so the selected device may easily communicate with the verifier system without changing any settings according to a plurality of requirements. This makes the verifier system far more applicable and agile to use. The protocol may be defined by the relying party and the selected device in co-operation.

The protocol chosen may be used for any verifiable presentation format, only requiring that the protocol used for presenting the verifiable presentation may allow at least two things:
1. Once the selected device receives an authorisation request for providing a specific presentation, the device may verify that the authorisation request is signed by parties the device trusts before sending a response back.
2. The authorisation request received by the device, which instructs the device to make a presentation, may comprise a key, such that the device may encrypt the presentation under this key when responding.

In a further advantageous embodiment of the invention, the data communication between the relying party and a device is based on an OpenID for verifiable presentations, OID4VP, protocol.

One notable standard that fulfilled the requirements of data communication between the verifier system and the device may be the OID4VP, OpenID for verifiable presentations, wherein the OpenID is an open standard authentication protocol. If the device supports the OID4VP protocol, the device does not require any other changes besides supporting OID4VP with encryption of verifiable presentations.

The data communication between the relying party and a selected device may be based on a OID4VP protocol. When the relying party receives the authorization request from the MPC verifier, the relying party will send authorization request to the selected device according to the OID4VP protocol. The selected device may return an authorization response according to the OID4VP protocol. The OID4VP may rely on a token standard, e.g., a JSON web token standard, to perform the respective signing or verification of the authorization request and the optional encryption or decryption used in the authorization response.

The OID4VP protocol may as an example follow a simple pattern when related to the verifier system and a device, for example as described below:
- The selected device may be in data communication with the verifier system, to initialize the data communication, and if needed, with details of the interaction being outside the scope of the standard.
- The MPC verifier may send the authorization request to the selected device via the relying party.
- The user interacts with the selected device, wherein the user may accept the transfer of the requested verifiable presentation.
- The selected device may send an authorization response to the MPC verifier via the relying party. The authorization response may be encrypted.
- The device may encrypt the authorization response based on the information received in the authorization request and the encryption method used.

In a still further advantageous embodiment of the invention, the MPC verifier is configured to generate a data file in a predetermined format, wherein the data file comprises the authorisation request, and the MPC verifier is configured to provide the data file to the relying party and the relying party is configured to provide the data file to a device.

The MPC verifier may generate a data file. The data file in a predetermined format. The data file may comprise at least the authorisation request. The relying party may receive the data file and send the data file to a selected device, wherein the selected device may read the data file in the predetermined format and obtains the knowledge of the authorisation request.

In an advantageous embodiment of the invention, the verifier system comprises at least one blockchain, wherein the relying party and the MPC verifier are configured to be in data communication via the blockchain.

The verifier system may comprise a blockchain. The relying party and the MPC verifier may be in data communication via the blockchain. The relying party may send the initial request to the MPC verifier via the blockchain, wherein the initial request comprises a request templet identification referring to a verification request template. The MPC verifier retrieves the initial request via the blockchain.

The blockchain may be configured to provide a plurality of data structures for data information. The term "list" may be a data structures. Other data structures may be used by the verifier system, such as verifier system lists or similar. The verifier system lists may comprise data information related to the verifier system for preserving verifiable presentations in privacy. There may be created one or more verifier system lists during the initialising process of the blockchain. Initially, the verifier system lists may be empty and ready to receive data information, which may be provided by the verifier system. The data information may be related to four lists as described below.
- A first list may be a template proposal list, which the verifier system may use for storing verification request templates. The verification request template may comprise a request templet identification and a request function . The verification request template may be added to the template proposal list
- A second list may be an accepted template list, which the MPC verifier may use for storing an accepted verification request template A predetermined numbers of servers from the MPC verifier may have accepted the verification request template in the template proposal list. The MPC verifier may continuously monitor the template proposal list looking for a new verification request template proposal. If the MPC verifier finds that the new verification request template is valid, the MPC verifier may provide the accepted verification request template to the accepted template list.
- A third list may be an authorization request list, which the relying party may use when requesting an authorization request from the MPC verifier.
   The relying party may check that there is no prior entry having the same template identification as the verification request template, before sending the initial request to the MPC verifier via the blockchain.
- A fourth list may be an authorization response list, which the relying party may use, when sending an authorization response received from the selected device to the MPC verifier.

In a further aspect of the invention, a server comprises one or more processing units and at least one data communication unit, wherein said server is comprised in a verifier system, wherein the server acts as one or more of following:
- a relying party or a part of a relying party,
- a node in at least one multiparty computation, MPC, verifier,
- at least one blockchain.

A server may comprise one or more processing units, such that the server may compute data information. The server may be related to or a part of the verifier system. The server may act at least as a relying party or a part of a relying party. The server may act at least as a node in at least one MPC verifier. The server may act at least as one blockchain. The server may act as a relying party or a part of a relying party, a MPC verifier and/or a blockchain.

A server may comprise data communication unit. The server may communicate with another server acting as a relying party or a part of a relying party. The server may communicate with another server acting as a node in at least one MPC verifier. The server may communicate with another server acting as at least one blockchain. The server may communicate with at least one device, when the server acts as a relying party or a part of a relying party. The server may communicate with at least one device, when the server acts as a MPC verifier.

In a further aspect of the invention, a verifier system comprises a plurality of servers having at least one processing unit configured to process data and at least one data communication unit, wherein at least one of the plurality of servers acts as a relying party and at least one of the plurality of servers acts as a multiparty computation, MPC, verifier, wherein the verifier system is configured to be in data communication with at least one device, wherein the method comprises following acts:
- the relying party provides an initial request to the MPC verifier,
- the MPC verifier generates an authorisation request based on the initial request,
- the relying party receives the authorisation request from the MPC verifier, and forwards the authorisation request to a selected device,
- the relying party receives, if the authorisation request is accepted by the selected device, an encrypted authorisation response comprising at least one verifiable presentation from the selected device,
- the relying party provides the encrypted authorisation response to the MPC verifier,
- the MPC verifier decrypts the encrypted authorisation response, and verifies the decrypted authorisation response,
- the relying party receives at least two shares of a requested result provided by the MPC verifier, if the verification is approved,
- the relying party reconstructs the requested result of the computation and obtains knowledge of the requested result.

At least a relying party and a MPC verifier, and, if present, a blockchain, may together acts as a verifier party in the verifier system. This reduces or eliminates the risk in that the relying party may act as a verifier and receive the presentation directly from a device, wherein the presentation may comprise more knowledge than the relying party needs to gain a reply. The relying party may provide and handle the interface between the verifier system and a device The verification of the presentation is performed by the MPC verifier, such that no information in the user's credential is released to the relying party or any other party, except for the credentials or part of the credentials the user of the credential has agreed to. To communicate the correct release of information in an indisputable manner to all servers in the MPC verifier, the relying party may communicate with the MPC verifier using a blockchain.

The relying party is configured to generate an initial request. The relying party may create an initial request similar to an almost complete authorization request, wherein the initial request comprises at least one data information field. One of the data information fields may be a presentation definition field. The presentation definition may comprise data information, which the relying party requests from the selected device. Other fields may be a nonce field and a client metadata field. The nonce field and the client metadata field may be void and ready to receive data information related to the authorization request. The relying party is configured to send the initial request referring to an accepted verification request template, such that the MPC verifier also receives the data information related to the accepted verification request template. The MPC verifier may add information in the nonce field and a client metadata field, and thereby provide an authorization request.

In an advantageous method acts of the invention, the method comprises further acts:
- the verifier system provides a request templet identification and a request function to the verification request template,
- the MPC verifier computes the decrypted authorisation response according to the request function related to the requested templet identification.

The verifier system may provide a verification request template comprising a request templet identification and a request function. The relying party may create the verification request template, which may be used for creating an authorisation request. The relying party may also create a request function according to the presentation definition and provide a unique templet identification related to the verification request template comprising the request function. The request function may hold two inputs: a list of verifiable presentations and a presentation submission.

The verification request template may comprise a purpose field wherein the request function is to be located. The purpose field may be a part of the presentation the device sends as an authorisation response to the verifier system. The MPC verifier may only compute the purpose field authorised by the device. The MPC verifier may compute the request function and based on the verifiable presentations from a device, the result from the computation may be revealed to the relying party.

In an advantageous method acts of the invention, the method comprises further acts:
- the relying party receives the authorisation response from a device,
- the MPC verifier decrypts the authorisation response based on the data information in the authorisation response,
- the MPC verifier verifies the authorisation response based on the authorisation response,
- the MPC verifier computes the authorisation response according to a request function provided in the authorisation request template,
- the MPC verifier provides the at least two shares of the requested result to the relying party,
- the relying party reconstructs the requested result.

In an advantageous method acts of the invention, the verifier system comprises a blockchain and the MPC verifier is configured to read the blockchain, wherein the method comprises further steps:
- the relying party posts the authorisation request template on the blockchain on a first list, a templates proposal list,
- the MPC verifier reads the authorisation request template on the blockchain,
- the MPC verifier, if accepted by the MPC verifier, adds the authorisation request template to the second list, an accepted template list as an accepted verification request template.

The verifier system may comprise a blockchain and the MPC verifier is configured to read and post on the blockchain. The relying party posts the authorisation request template on the blockchain, once the relying party has provided a new authorisation request template. The authorisation request template may be added to the template proposal list related to the blockchain as a verification request template proposal.

The MPC verifier may retrieve the data information related to the authorisation request template when reading the blockchain. The new verification request template proposal has a new request templet identification. The MPC verifier verifies if the verification request template proposal is valid, or the verification request template proposal should be rejected. If the verification request template proposal is valid, the verification request template will be accepted when a predetermined numbers of servers or nodes has provided an accepted notification for the verification request template. If accepted, the MPC verifier may add an accepted verification request template to the second list, an accepted template list.

In an advantageous method acts of the invention, the method comprises further acts:
- the relying party provides an initial request to a blockchain, in an authorization request list,
- the MPC verifier reads the initial request on the blockchain in the authorization request list,
- the MPC verifier generates an authorisation request based on the initial request,
- the relying party receives the authorisation request from the MPC verifier, and forwards the authorisation request to a selected device,
- the relying party receives, if the authorisation request is accepted by the selected device, an encrypted authorisation response comprising at least one verifiable presentation from the selected device, and posts a received authorization response on the blockchain in an authorization response list,
- the MPC verifier reads the authorization response on the blockchain in the authorization response list,
- the MPC verifier decrypts the encrypted authorisation response.

This invention has now been explained with reference to a few embodiments and methods, which have only been discussed to illustrate the many varying possibilities achievable with the verifier system and method according to the present invention.

### Brief description of the drawings

The embodiments of the invention are described in the following with reference to:
Fig. 1: Illustrating an example of a verifier system in data communication with a device.
Fig. 2: Illustrating an example of a verifier system comprising a blockchain.
Fig. 3: Illustrating an example of a verifier system's data communication.

In the explanations of the figures, identical or corresponding elements will be provided with the same designations in different figures. Therefore, no explanation of all details will be given in connection which each single figure/embodiment.

### Detailed description

Embodiments of the invention are explained in the following detailed description. It is to be understood that the invention is not limited in its scope to the following description or illustrated in the drawings. The invention is capable of other embodiments and of being practiced or carried out in various ways.

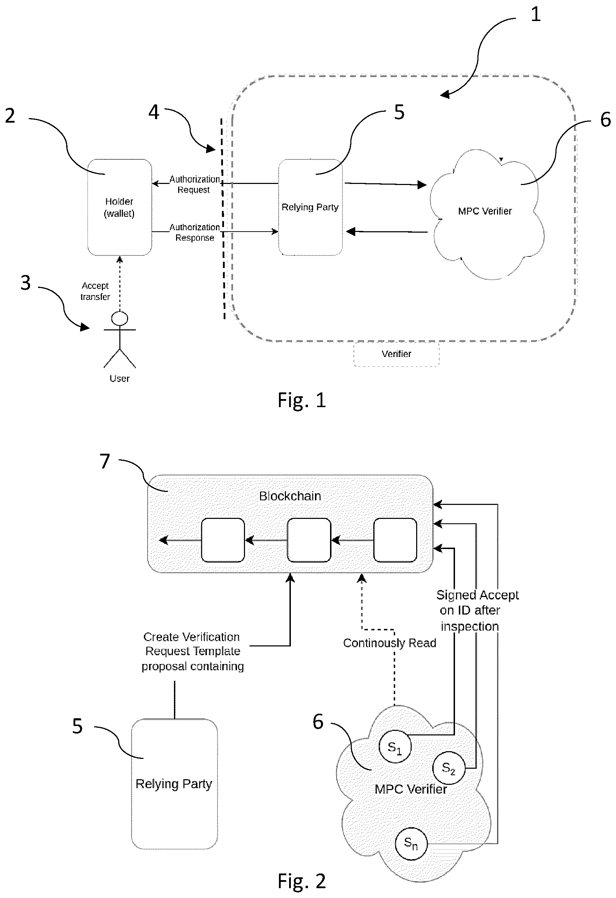

Fig. 1 illustrates an example of a verifier system 1 in data communication with a device 2, e.g., a user's 3 wallet device 2. The verifier system 1 handles verifiable credential, e.g., information about a user of the wallet device 2, presented as verifiable presentation. An interface 4 is provided between the verifier system 1 and the device 2. The data communication between the verifier system 1 and the wallet device 2 is based on one of a plurality of data communication protocols, defined by the verifier system 1 or the device 2. The data communication may for example be based on a OID4VP protocol. Other similar protocols may be selected. The verifier system 1 may send the authorization request to the device 2. A user 3 interacts with the device 2, wherein the user 3 may accept the transfer of a verifiable presentation to the verifier system 1. The device 2 may provide an authorization response to verifier system 1.

The verifier system 1 comprises a relying party 5 and a MPC verifier 6. The relying party 5 may be in data communication with the MPC verifier 6. A protocol may provide a data communication between the relying party 5 and the device 2. The relying party 5 may send the authorization request to the device 2. The relying party 5 may send the authorization request to the device 2, which may be provided by the MPC verifier 6. A user 3 interacts with the device 2, wherein the user 3 may accept the transfer of a verifiable presentation to the verifier system 1. The device 2 may provide an authorization response to verifier system 1, which is received by the relying party 5. The device 2 may provide an authorization response to verifier system 1, which is received by the relying party 5 and forwarded to the MPC verifier 6.

The protocol used for data communication may preferably ensure that data communication from the verifier system 1 to the device 2 is signed. The device 2 may verify system 1 that the data communication is signed by a suitable party, i.e., a trustworthy party, using a public key and a verification algorithm. For example, an authorisation request is sent from the verifier system 1 to the device 2, wherein the authorisation request may contain a nonce for later verification and is signed by the verifier system 1. Once the device 2 receives an authorisation request from the verifier system 1, the device 2 verifies the signature. The device 2 presents to the user 3. The user 3 may choose to make a verifiable presentation of the user credential to the relying party 5.

The data communication from the device 2 to the verifier system 1 may contain the actual verifiable presentation, which can be encrypted under a key specified by the verifier system 1. For example, an authorisation response may be sent from the device 2 to the verifier as a response to an authorization request. The content of the authorisation response should be encrypted by the device 2 using a public key found in the signed authorisation request. If the user 2 chooses to perform the presentation, the device 2 may create the authorisation response using the provided nonce and return it according to the protocol. The authorization response may be encrypted under a public key for which the secret key was controlled by the verifier system 1 signing the authorisation request.

Fig. 2 illustrates an example of a verifier system comprising a blockchain. The verifier system 1 comprises a relying party 5, a MPC verifier 6 and a blockchain 7. The MPC verifier 6 comprises a plurality of nodes S1, S2, Sn. The relying party 5 may be in data communication with the MPC verifier 6 via the blockchain 7. The MPC verifier continually monitors one or more lists on the blockchain 7, wherein the lists may be directly related to the verifier system 1. The blockchain may for example create four lists related to the verifier system. Initially, all the lists may be read by and/or ready to receive data information from one or both of the relying party and the MPC verifier.

A first list may be a template proposal list, which the verifiers system 1, e.g. the relying party 5, may use for storing verification request templates proposals. The relying party 5 may create at least one verification request templet proposal and add the verification request templet proposal to the blockchain 7. The verification request templet proposal may be added to the template proposal list. The relying party 5 may provide a new verification request template and adding a verification request template to the verification request template proposal. The relying party 5 may add a request templet identification and a request function to the verification request template.

When the MPC verifier 6 observes that a new verification request template proposal has been added to the template proposal list. The new verification request template proposal has a new request templet identification. The MPC verifier 6 verifies that the verification request template proposal is valid. If the verification request template proposal is valid, the verification request template will be accepted when a predetermined numbers of nodes (S1,S2,Sn) has provided an accepted notification for the verification request template. An accepted verification request template may then be added to the second list, an accepted template list.

A third list may be an authorization request list, which the relying party 5 may use when requesting an authorization request from the MPC verifier 6. The MPC verifier may continuously monitor the authorization request list, such that when the relying party adds an initial request to the authorization request list, the MPC verifier 6 observes that a new request has been added to the authorization request list. The MPC verifier 6 may then prepare an authorization request for a device.

A fourth list may be an authorization response list, which the relying party 5 may use when sending a received authorization response to the list, when receiving an authorization response from a device. The MPC verifier 6 may continuously monitor the authorization request list, such that when the relying party adds a received authorization response to the authorization request list, the MPC verifier 6 observes that a new received authorization response has been added to the authorization response list. The MPC verifier 6 may then prepare a requested result to the relying party.

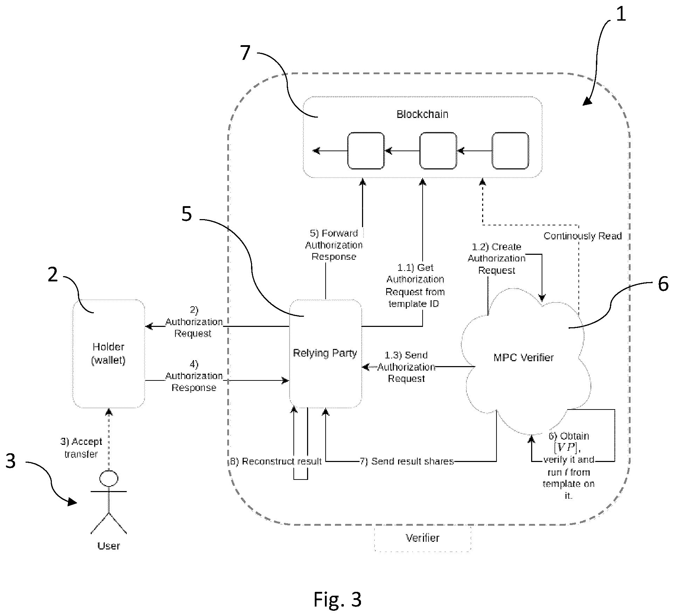

Fig. 3illustrates an example of a verifier system's data communication. In this example the verifier system 1 comprise a relying party 5, a MPC verifier 6 and a blockchain 7. An external data communication is provided between the verifier system 1 and a wallet device 2. The data communication handles the transfer of the authorisation request and authorisation response between the relying party and the device 2.

The relying party 5 may wish to request to receive a verifiable presentation from a user of a wallet device 2.
1)
   1.1) The relying party 5 create an initial request, wherein the relying party 5 requests the MPC verifier 6 to make an authorisation request based on a verification request template identification provided by the relying party 5.
   1.2) The MPC verifier checks that the request templet identification belongs to an accepted verification request template and creates a corresponding authentication request by filling in data in the nonce and the client metadata field.
   1.3) The authentication request is sent to the relying party.
2) The relying party 5 forwards the authorization request to the wallet device 2, which will verify the signature on the authorization request and present the authorization request to the user 3.
3) The user approves or rejects the authorization request, that if the presentation should be made, e.g. based on a purpose field in the request.
4) If the user 3 approves the authorization request, the wallet device 2 sends an authorization response to the relying party 5.
5) The relying party 5 forwards the authorization response to the MPC verifier using the blockchain 7.
6) The MPC verifier decrypts and verifies the authorization response. If the MPC verifier may not be able to verify the authorization response, the MPC verifier aborts the MPC-protocol. If the MPC verifier may verify the authorization response, the MPC verifier run the function associated related to the respective verification request template identification on the secret shared verifiable presentation and the presentation submission.
7) The MPC verifier sends the shares, which is needed to reconstruct the requested result, back to the relying party 5.
8) The relying party reconstructs the result and thereby obtain knowledge of the result.

## Claims

1. A verifier system for preserving verifiable presentations in privacy, wherein the verifier system (1) comprises a plurality of servers each having at least one processing unit configured to process data and at least one data communication unit, wherein the verifier system (1) is configured for being in data communication with at least one device (2), wherein at least one server of the plurality of servers is configured to act as relying party (5) and at least two servers of the plurality of servers are configured to act as nodes (S1, S2, Sn) in a multiparty computation, MPC, verifier (6), wherein the relying party (5) and the MPC verifier (6) are configured to be in data communication, wherein the relying party (5) is configured to provide an initial request to the MPC verifier, requiring a result based on a verifiable presentation from a device, wherein the MPC verifier (6) is configured to generate an authorisation request based on the initial request, wherein the relying party (5) is configured to forward said authorisation request from the MPC verifier (6) to a device (2), wherein the relying party (5) is configured to receive an encrypted authorisation response comprising a verifiable presentation from a device (2) and forward the encrypted authorisation response to the MPC verifier (6), wherein the MPC verifier (6) is configured to decrypt the authorisation response before sending a requested result based on the verifiable presentation to the relying party (5), wherein the relying party (5) is configured to obtain knowledge of the requested result.

2. The verifier system according to claim 1, wherein the relying party (5) is configured to receive at least two shares of the result from the MPC verifier (6) and reconstruct the requested result from the at least two shares, and thereby obtains knowledge of the requested result.

3. The verifier system according to claim 1 or 2, wherein the MPC verifier is configured to identify the initial request and, if accepted, provide an accepted initial request, wherein the MPC verifier (6) is configured to provide an authorisation request by adding data information to an accepted initial request, wherein the MPC verifier (6) is configured to send the authorisation request to a device (2) via the relying party (5).

4. The verifier system according to claim 3, wherein the data information comprises at least one encryption information.

5. The verifier system according to any one of the preceding claims, wherein the verifier system is configured to at least provide a request function according to a predetermined definition and provide one or both of at least one request templet indentification and the request function to a request template.

6. The verifier system according to any one of the preceding claims, wherein the data communication between the relying party (5) and a device (2) is based on at least one of a plurality of data communication protocols selected by the relying party (5) or a device (2).

7. The verifier system according to any one of the preceding claims, wherein the data communication between the relying party (5) and a device (2) is based on an OpenID for Verifiable Presentations, OID4VP, data communication protocol.

8. The verifier system according to any one of the preceding claims, wherein the MPC verifier (6) is configured to generate a data file in a predetermined format, wherein the data file comprises the authorisation request, and the MPC verifier (6) is configured to provide the data file to the relying party (5) and the relying party is configured to provide the data file to a device (2).

9. The verifier system according to any one of the preceding claims, wherein the verifier system (1) comprises at least one blockchain (7), wherein the relying party (5) and the MPC verifier (6) are configured to be in data communication via the blockchain (7).

10. A server comprising one or more processing units and at least one data communication unit, wherein said server is comprised in a verifier system (1) according to any one of the claims 1- 8, wherein the server acts as one or more of the following:
- a relying party (2) or a part of a relying party (2),
- a node (S1, S2, S3) in at least one multiparty computation, MPC, verifier (6),
- at least one blockchain (7).

11. A method for preserving verifiable presentations in privacy, wherein a verifier system (1) comprises a plurality of servers having at least one processing unit configured to process data and at least one data communication unit, wherein at least one of the plurality of servers acts as a relying party (5) and at least one of the plurality of servers acts as a multiparty computation, MPC, verifier, wherein the verifier system (1) is configured to be in data communication with at least one device (2), wherein the method comprises following acts:
- the relying party (5) provides an initial request to the MPC verifier (6),
- the MPC verifier (6) generates an authorisation request based on the initial request,
- the relying party (5) receives the authorisation request from the MPC verifier (6), and forwards the authorisation request to a selected device (2),
- the relying party (5) receives, if the authorisation request is accepted by the selected device (2), an encrypted authorisation response comprising at least one verifiable presentation from the selected device (2),
- the relying party (5) provides the encrypted authorisation response to the MPC verifier (2),
- the MPC verifier (2) decrypts the encrypted authorisation response,
- the relying party (5) receives a requested result or at least two shares of a requested result provided by the MPC verifier (2),
- the relying party (5) reconstructs the requested result of the computation and obtains knowledge of the requested result.

12. The method according to claim 11, wherein the method comprises further acts:
- the verifier system(1) provides a request templet identificaition and a request function to a verification request template,
- the MPC verifier (6) computes the decrypted authorisation response according to the request function related to the requested templet identification.

13. The method according to claim 13 or 14, wherein the method comprises further one or more of following acts:
- the relying party receives the authorisation response from a device (2),
- the MPC verifier (6) decrypts the authorisation response based on the data information in the authorisation response,
- the MPC verifier (6) verifies the authorisation response based on the data information in authorisation response,
- the MPC verifier (6) computes the authorisation response according to a request function provided in the authorisation response,
- the MPC verifier (6) provides the at least two shares of the requested result to the relying party (5),
- the relying party (5) reconstructs the requested result.

14. The method according to claim 11, 12 and 13, wherein the verifier system (1) comprises a blockchain and the MPC verifier is configured to read the blockchain, wherein the method comprises further steps:
- the relying party posts the authorisation request template onto the blockchain in a template proposal list,
- the MPC verifier reads the authorisation request template on the blockchain in the template proposal list,
- the MPC verifier, if the authorisation request template is accepted by the MPC verifier, adds the authorisation request template to the second list, an accepted template list as an accepted verification request template.

15. The method according to claim 14, wherein the method comprises further acts:
- the relying party (5) provides an initial request to a blockchain (7), in an authorization request list,
- the MPC verifier reads the initial request on the blockchain (7) in the authorization request list,
- the MPC verifier (6) generates an authorisation request based on the initial request,
- the relying party (5) receives the authorisation request from the MPC verifier (6), and forwards the authorisation request to a selected device (2),
- the relying party (5) receives, if the authorisation request is accepted by the selected device (2), an encrypted authorisation response comprising at least one verifiable presentation from the selected device (2), and posts a received authorization response on the blockchain (7) in an authorization response list,
- the MPC verifier reads the authorization response on the blockchain (7) in the authorization response list,
- the MPC verifier (2) decrypts the encrypted authorisation response,
